Europäisches Patentamt

European Patent Office

Office européen des brevets

(19)

(11) Veröffentlichungsnummer: **0 427 076 A2**

(12) **EUROPÄISCHE PATENTANMELDUNG**

(21) Anmeldenummer: 90120669.8

(51) Int. Cl.⁵: **G09B 9/04**

(22) Anmeldetag: 29.10.90

(30) Priorität: 06.11.89 DE 3936877

(43) Veröffentlichungstag der Anmeldung:
15.05.91 Patentblatt 91/20

(84) Benannte Vertragsstaaten:
AT CH DE DK FR IT LI NL SE

(71) Anmelder: MaK System Gesellschaft mbH
Falckensteiner Strasse 2
W-2300 Kiel 17(DE)

(72) Erfinder: Best, Peter, Dipl.-Ing.
Prieser Höhe 18
W-2300 Kiel 17(DE)

(74) Vertreter: Hansmann, Dierk, Dipl.-Ing.
Jessenstrasse 4
W-2000 Hamburg 50(DE)

(54) Fahrsimulator.

(57) Bei einem Fahrsimulator ist zur Erzeugung von Bewegungseindrücken vorgesehen, daß bei im wesentlichen ortsfest angeordneter Kabine die Bedienelemente jeweils über Aufnahmen beweglich angeordnet sind. Hierzu greifen an den Aufnahmen zugeordnete einstellbare Stellelemente an, die eine Verschiebung in mehreren Bewegungsebenen ermöglichen und über eine Steuereinheit ansteuerbar sind.

# FAHRSIMULATOR

Die Erfindung bezieht sich auf einen Fahrsimulator zur Erzeugung von Bewegungseindrücken auf Testpersonen bei einer Handhabung unter Verwendung einer Kabine mit einem Sitz und Bedienelementen, insbesondere für die Simulation von Kettenfahrzeugen mit Lenkeinrichtungen, wie Lenkbremshebel, Betätigungspedale und Richtgriffe, wie sie für Richtschützenplätze vorhanden sind.

Es ist die Verwendung von Fahrsimulatoren gemäß EP-OS 335 585 und DE-Z VDI Nachrichten Nr. 28 vom 12. Juli 1985, Seite 13, "Testfahrt im Dom" bekannt, um unter fahrzeugspezifischen Belastungen Schulungen und Tests durchzuführen, ohne ein Fahrzeug zu benutzen. Derartige Simulatoren bestehen in der Regel aus vollständigen Fahrzeugbedienplätzen mit einer möglichst naturgetreuen Nachbildung der Bedienerumgebung, sei es beispielsweise der Fahrerplatz oder ein Bedienerplatz in einem Fahrzeug, wobei der gesamte Platz in einer Kabine untergebracht ist, so daß die Testperson keine ungewollten Kontakte zur Umgebung besitzt. Diese Kabinen sind in der Regel beweglich gelagert und können in den verschiedenen Bewegungsachsen lateral und rotatorisch über gewisse Weg- und Winkelstrecken bewegt werden. Hierdurch wird der Eindruck des Fahrens unter unterschiedlichen Zuständen, wie Beschleunigungsfahrt, Bremsfahrt, Kurvenfahrt, Fahren über Hindernisse erzeugt. Dabei reagiert die Kabine in ähnlicher Form wie ein Fahrzeug auf die Bedienungssignale der Testperson, wie beispielsweise Lenken, Gasgeben und Bremsen.

Ferner ist hierbei gemäß DE-AS 10 99 365 und EU-OS 55 079 vorgesehen, eine Simulierung von Rückstellkräften eines Lenkrades einerseits und eines Steuerknüppel andererseits vorzunehmen, wobei diese Rückstellkräfte vom simulierten Fahr- bzw. Flugzustand und vom Betätigungseinschlag abhängig gemacht werden.

Neben diesen Ausbildungen besteht insbesondere bei Kettenfahrzeugen das Problem, daß durch unebene Fahrbahnen, Kurvenfahrt, Bremsen und Beschleunigung eine Verlagerung zwischen den Bedienelementen und der mit mit ihnen in Kontakt stehenden Füße und Hände der Bedienungsperson durch Bewegungsänderung eintritt und dabei auch durch die abweichenden Abfederungen die Bedienelemente zueinander Änderungen aufweisen.

Die Aufgabe der Erfindung ist es, die bekannten Anordnungen weiterzubilden und der reduzierten Aufwand einen Eindruck zu vermitteln, um hiermit eine Simulation einer realen Fahrsituation bezüglich der die Bedienelemente zugeordneten Extremitäten des Bedieners zu ermöglichen.

Die Lösung dieser Aufgabe erfolgt erfindungsgemäß dadurch, daß die Bedienelemente jeweils über Aufnahmen beweglich gegenüber der Kabine zur Simulation von Fahrzuständen angeordnet sind und über zugeordnete einstellbare Stellelemente in mehreren Bewegungsrichtungen über eine Steuereinheit zur Verschiebung relativ zueinander und gegenüber dem Sitz veränderlich ansteuerbar sind.

Die Bewegungsarten und -richtungen der zuvor genannten Aufnahmen bestimmen sich aus der Art der zu simulierenden Fahrzeugbewegung. Das bedeutet, daß jedes Teilsystem im Prinzip in sechs Freiheitsgraden bewegt werden muß (drei translatorische und und drei rotatorische Freiheitsgrade). Es erscheint aber sinnvoll, jeweils nur die drei translatorischen Freiheitsgrade zu benutzen bzw. eine einfach zu realisierende Kombination aus Translationsbewegung und einer zu dieser fest zugeordneten Rotationsbewegung. Dies bedeutet, daß bei dem kaum verminderten realitätsnahen sensorischen Eindruck auf die Testperson eine erhebliche Vereinfachung und Verbilligung des Simulators auftritt.

Um eine weitere Vereinfachung durchzuführen, wird vorgeschlagen, daß Relativbewegungen der Aufnahmen mit den Bedienelementen über die Stellelemente in Richtung der Krafteinleitung bezogen auf Hand und Fuß der Testperson erfolgt.

Eine günstige Ausgestaltung wird dadurch geschaffen, daß über die Stellelemente durch Vertikalbewegungen, Längsbewegungen und Kippbewegungen der Bedienelemente gegenüber dem Sitz einstellbar sind.

Weiterhin wird zur wirkungsvollen Ausbildung vorgeschlagen, daß die Aufnahme für Betätigungspedale eine Bodenfläche für eine Fußaufnahme der Testperson aufweist.

Durch derartige Ausbildungen können auch Simulatoren für Arbeitsplätze auf Fahrzeugen, die während der Fahrt bedient werden müssen, ausgebildet werden. Dieses können beispielsweise Mannschaftsplätze innerhalb von Kettenfahrzeugen und Fahrzeugen für die Erdbewegung sein, bei denen die Beherrschung von bestimmten Bedienabläufen auch während der Fahrt notwendig ist und geschult werden muß.

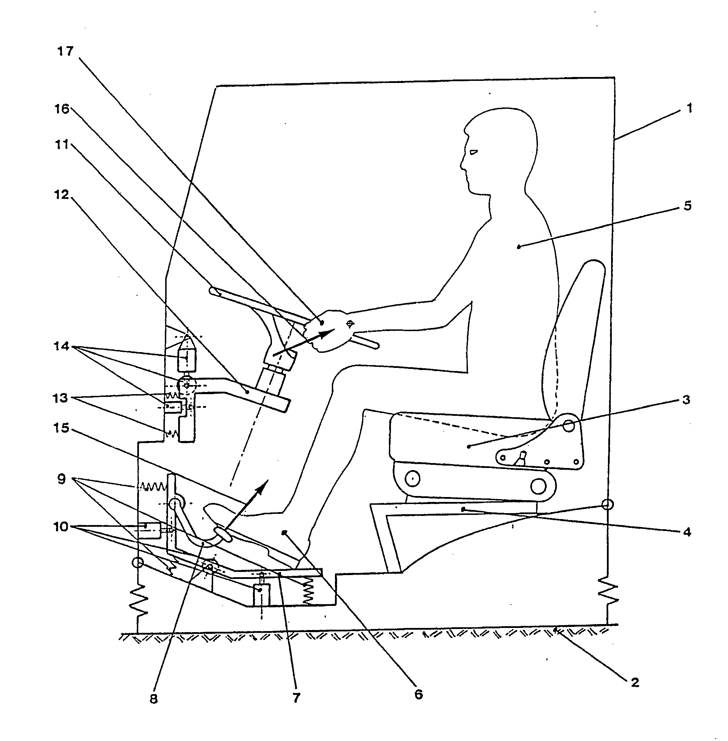

In der Zeichnung ist ein Ausführungsbeispiel mit einer Fahrerkabine schematisch dargestellt.

Hierbei ist eine Kabine 1 auf einer feststehenden Grundfläche 2 angeordnet, wobei eine Beweglichkeit nicht bzw. nur in einem begrenzten Umfang vorgesehen ist. Innerhalb der Kabine 1 befindet sich ein Fahrersitz 3 auf einer mit der Kabine 1 fest verbundenen Konsole 4. Der Fahrersitz 3 ist somit gegenüber der Kabine 1 nicht beweglich, jedoch kann er auf der Sitzfläche und in der Rückenlehne an sich bekannte Elemente zur Erzeugung eines Bewegungseindruckes enthalten.

Es ist eine Testperson 5 gezeigt, die sich mit ihren Füßen 6 auf einer Plattform als Aufnahme 7 abstützt, welche auch Betätigungspedalen 8 als Bedienelemente des Fahrzeuges aufnimmt. Die Aufnahme 7 ist über Federelemente 9 beweglich mit der Kabine 1 verbunden. Zusätzlich ist die Aufnahme 7 durch translatorisch wirkende Stellelemente 10 in drei Bewegungsrichtungen entsprechend einem gesteuerten Bewegungsprogramm verschiebbar.

Entsprechend ist ein Lenkrad 11 mit den nicht weiter gezeigten übrigen Handbedienelementen an einer Konsole als Aufnahme 12 befestigt, die ihrerseits über Federelemente 13 mit der Kabine 1 verbunden ist und durch steuerbare Stellelemente 14 relativ zur Kabine 1 und zum Fahrersitz 3 bewegt werden kann.

Die Aufhängung über die Federelemente 9,13 und Stellelemente 10,14 soll dabei das Prinzip der Bewegbarkeit relativ zur Kabine 1 widergeben. Selbstverständlich sind auch andere Ausführungsformen für die Halterung und Bewegung denkbar und durchführbar.

Besonders vereinfachend für den Simulator ist es, wenn die Aufnahmen 7 und 12 nahezu ausschließlich in den Krafteinleitungsrichtungen 15,16 der Füße 6 und der Hände 17 der Testperson 5 bewegbar sind.

wegungen und Kippbewegungen der Bedienelemente (8,11) gegenüber dem Sitz (3) einstellbar sind.

4. Fahrsimulator nach einem der Ansprüche 1 bis 3, dadurch gekennzeichnet, daß die Aufnahme (7) für Betätigungspedale (8) eine Bodenfläche für eine Fußaufnahme der Testperson (5) aufweist.

## Ansprüche

1. Fahrsimulator zur Erzeugung von Bewegungseindrücken auf Testpersonen bei einer Handhabung unter Verwendung einer Kabine mit einem Sitz und Bedienelementen, insbesondere für die Simulation von Kettenfahrzeugen mit Lenkeinrichtungen, wie Lenkbremshebel, Betätigungspedale und Richtgriffe, wie sie für Richtschützenplätze vorhanden sind, dadurch gekennzeichnet, daß die Bedienelemente (8,11) jeweils über Aufnahmen (7,12) beweglich gegenüber der Kabine (1) zur Simulation von Fahrzuständen angeordnet sind und über zugeordnete einstellbare Stellelemente (10,14) in mehreren Bewegungsrichtungen über eine Steuereinheit zur Verschiebung relativ zueinander und gegenüber dem Sitz (3) veränderlich ansteuerbar sind.

2. Fahrsimulator nach Anspruch 1, dadurch gekennzeichnet, daß Relativbewegungen der Aufnahmen (7,12) mit den Bedienelementen (8,11) über die Stellelemente (10,14) in Richtung der Krafteinleitung bezogen auf Hand (17) und Fuß (6) der Testperson (5) erfolgt.

3. Fahrsimulator nach einem der Ansprüche 1 oder 2, dadurch gekennzeichnet, daß über die Stellelemente (10,14) durch Vertikalbewegungen, Längsbe-